# EUROPÄISCHE PATENTANMELDUNG

(11) **EP 3 771 837 A1**
(43) Veröffentlichungstag der Anmeldung: **03.02.2021**
(21) Anmeldenummer: 19189400.5
(22) Anmeldetag: 31.07.2019
(51) Int. Cl.: F16B 13/12, F16B 19/10, F16B 43/00

(54) **DÄMPFUNGSELEMENT**

(71) Anmelder: SFS Intec Holding AG, 9435 Heerbrugg (CH)
(72) Erfinder: Bregar, Sebastian, 9450 Lüchingen (CH)

(57) **Zusammenfassung**

Ein Dämpfungselement (10) dient zur Anbringung zwischen einem Einrichtungsgegenstand und dessen vorgesehener Kontaktfläche zur Verminderung von Körperschallübertragung. Es weist einen flächigen Körper auf mit einer ersten Auflagefläche (12) und einer ihr gegenüberliegend angeordneten zweiten Auflagefläche (14). Auf der ersten Auflagefläche ist ein zylinderförmiger Zapfen (20) angeordnet. In einer weiteren Variante weist der flächige Körper im Wesentlichen eine L-Kontur (18) auf. In einem axialen Längskanal des Zapfens kann ein Sicherungsstift (30) versenkt werden. Das Dämpfungselement wird einstückig aus elastischem Material hergestellt.

Der Zapfen wird in ein Bohrloch an einem Einrichtungsgegenstand eingebracht, so dass die Auflageflächen einseitig am Einrichtungsgegenstand anliegen. Danach wird der Sicherungsstift vollständig versenkt und die Lage des Dämpfungselements damit gesichert.

## Beschreibung

Die vorliegende Erfindung befasst sich mit einem Dämpfungselement, das zwischen einem Einrichtungsgegenstand und einer Kontaktfläche angebracht werden kann und die Übertragung von Körperschall vermindert.

### HINTERGRUND

Im Bauwesen ist es häufig erforderlich, Einrichtungsgegenstände wie Möbel, Schränke, Regale oder ähnliches an Wänden zu befestigen, d.h. gegen Kippen zu sichern oder aufzuhängen. Bei einer ungedämpften Verbindung werden dabei aber zwangsläufig auch Erschütterungen übertragen, die beim Belasten oder Entlasten der Einrichtungsgegenstände entstehen. Mit "schallentkoppelnd" ist daher im engeren Sinne "körperschall-entkoppelnd" gemeint, auch wenn im Folgenden der Einfachheit halber von "schallentkoppelnd" die Rede sein wird. Eine Schallentkopplung bzw. körperschallentkoppelnde Dämpfung ist in vielen Fällen wünschenswert, aus Gründen der Geräuschdämmung wie auch zur Vermeidung von Beschädigungen der Wandelemente.

### STAND DER TECHNIK

Im Stand der Technik sind viele verschiedene Lösungen für dieses Problem bekannt. Elastische und/oder dämpfende Elemente zwischen Einrichtungsgegenstand und Wand bzw. Wandbauteil bzw. Kontaktfläche einzufügen ist üblich. Dämpfende Scheiben oder plattenförmige Elemente aus Kunststoff, Gummi, Kork wurden seit langem hierzu verwendet. Ebenso ist es bekannt, solche Dämpfungselemente bei der Herstellung von Einrichtungsgegenständen bereits bei der Fertigung anzubringen und so dem Monteur bzw. Endkunden vor Ort einen Montageschritt abzunehmen.

Umgekehrt entsteht damit aber auch die Notwendigkeit, solche Dämpfungselemente jeweils in der richtigen Anzahl und an der richtigen Stelle anzubringen. Wird ein solches Dämpfungselement bei der Montage vergessen, falsch oder unvollständig eingesetzt, können (Körper-)Schallbrücken die Folge sein, die später sehr schwer zu entdecken und/oder zu korrigieren sind.

Üblicherweise werden flächige Dämpfungselemente durch Klammern, Kleben oder Klemmen realisiert. Diese Befestigungsverfahren sind relativ aufwändig oder nicht immer transportsicher.

Es besteht von daher das Bedürfnis, ein Dämpfungselement zu schaffen, das sicher in der Handhabung ist, kompatibel zu bereits bestehenden Herstellverfahren im Möbelbau und darüber hinaus einfach in der Herstellung und Konfektionierung ist.

### BESCHREIBUNG DER ERFINDUNG

Ein Dämpfungselement gemäss der vorliegenden Erfindung ist ausgelegt zur Anbringung zwischen einem Einrichtungsgegenstand und dessen vorgesehener Kontaktfläche. Mit Einrichtungsgegenstand sind Baukörper gemeint wie Möbel, Schränke, Regale oder ähnliches in Privat- wie Industriebauten. Die Kontaktfläche ist als Fläche zu verstehen, die ein Einrichtungsgegenstand berühren würde, wenn er seine Soll-Position ohne Dämpfungselement einnehmen würde. Mit Kontaktfläche ist nicht gemeint, dass der Einrichtungsgegenstand an dieser Stelle zwingend befestigt wird, es ist aber nicht ausgeschlossen. Das Dämpfungselement kann auch nur zwischen Einrichtungsgegenstand und Kontaktfläche geklemmt sein, lose anliegen oder auch - im Falle von Belastung oder Erschütterung - nur kurzzeitig oder vorübergehend dämpfend wirken.

Das Dämpfungselement weist einen flächigen Körper auf mit einer ersten Auflagefläche und einer ihr gegenüberliegend angeordneten zweiten Auflagefläche. Damit ist im weitesten Sinne ein Körper gemeint, der geeignet ist, durch seine Form und Beschaffenheit (Material) die Dämpfungsfunktion zu gewährleisten. Flächig meint in diesem Zusammenhang, dass er die beiden Auflageflächen zur Verfügung stellt. Sie sind bevorzugt parallel angeordnet und begrenzen zwischen sich das dämpfende Volumen des Körpers. Die weitere Form wird durch den Anwendungszweck bestimmt. Flächig wäre beispielsweise ein flacher Quader dessen Ober- und Unterseite die Auflageflächen bilden. Flächig wäre aber auch ein Körper, der entlang einer Kante abgeknickt ist und eine L-Form oder L-Kontur bildet. Auch er stellt die zwei gegenüberliegenden Auflageflächen zur Verfügung.

Kennzeichnend für die Erfindung und wesentlich für die verbesserte Funktion als Dämpfungselement ist ein auf der ersten Auflagefläche angeordneter zylinderförmiger Zapfen. Ist die erste Auflagefläche eine einzelne, ebene FlächeBevorzugt weist der Zapfen einen axia-len Längskanal durch die Zentralachse des Zapfens auf, der sich auch durch den Körper des Dämpfungselementes hindurch erstreckt und eine Öffnung in der zweiten Auflagefläche bildet. Im weitesten Sinne kann der Zapfen auch als kurzes Rohrstück oder im Wesentlichen hohlzylindrischer Körper beschrieben werden, dessen Durchgang bis durch den Körper des Dämpfungselementes reicht.

In diesem Sinne wird der Längskanal bevorzugt als im Querschnitt kreisrunder, rohrförmiger Hohlraum ausgebildet sein.

Wie aus der Beschreibung der Verwendung weiter unten hervorgeht, ist es für die Anwendung vorteilhaft, wenn der Zapfen an seinem von der ersten Auflagefläche wegweisenden Ende eine konusförmige Abschrägung aufweist. Der Zapfen ist zur Einführung in eine Bohrung gedacht, die konusförmige Abschrägung dient damit als Einführhilfe. Ferner kann der Zapfen an seiner Mantelfläche angeordnete Längsrippen aufweisen. Diese vermindern im Zusammenspiel mit dem weiter unten beschriebenen Sicherungsstift die Verdrehbarkeit und verbessern die Klemmung.

Der Funktion als Dämpfungselement folgend wird das Element und der Zapfen einstückig aus elastischem Material geprägt, gepresst, gegossen oder formgespritzt. Je nach Einsatzzweck kann das Material weichelastisch oder hartelastisch gewählt werden. Schäume, Silikone oder Gummi sind Beispiele für entsprechende Materialien. Bevorzugt wird die zweite Auflagefläche mit einer konturierten oder texturierten Oberfläche ausgestattet. Dies kann ein Rillen / Stegprofil, Noppen, Wellenprofil oder einer aufgerauten Oberfläche sein. Diese verbessert einerseits die Dämpfungseigenschaften und kann die Rutschsicherheit erhöhen.

Der Innendurchmesser des axialen Längskanals wird bevorzugt nicht konstant ausgelegt, sondern verringert sich von der Öffnung in der zweiten Auflagefläche weg entlang des Kanals. Im Zusammenspiel mit dem weiter unten beschriebenen Sicherungsstift mit konstantem Schaftdurchmesser wird erreicht, dass ein solcher Sicherungsstift klemmend in den Längskanal von der Seite der zweiten Auflagefläche eingeführt werden kann.

Das erlaubt, Dämpfungselement und Sicherungsstift für die Montage am Einrichtungsgegenstand vorzukonfektionieren. Insbesondere bevorzugt wird die Durchmesser-Verringerung nicht kontinuierlich erfolgen (obwohl dies technisch und funktionell möglich wäre), sondern als eine von der Öffnung entfernte, im Längskanal angeordnete Stufe ausgeführt. Anders formuliert, besteht der Längskanal aus zwei Abschnitten mit unterschiedlichen Durchmessern, die an einer Stufe oder einem Übergang ineinander münden. Der Innendurchmesser des Längskanals wird sich dort von einem konstanten ersten Wert zu einem geringeren (zweiten) Wert reduzieren. Beim Vorkonfektionieren wird also der Sicherungsstift in den Kanal von der zweiten Auflagefläche her eingeführt, bis dessen Spitze an der Stufe anstösst. Dort befindet er sich so im Klemmsitz, so dass der Stift nicht selbsttätig aus dem Dämpfungselement herausfallen kann. Der Innendurchmesser des zweiten Kanalabschnittes wird so bemessen, dass der Kraftaufwand, um den Stift einzudrücken, höher ist, aber z.B. mit einem Daumendruck erreicht werden kann.

Der bereits vorerwähnte Sicherungsstift ist aus einem nicht-elastischen Material ausgeführt. Nicht-elastisch ist hierbei im technisch üblichen Sinne gemeint, entsprechend einer Härte von Hartkunststoff oder Metall. Sein Aussendurchmesser ist so gewählt ist, dass er, wie erwähnt, klemmend in die Öffnung in der zweiten Auflagefläche einführbar ist. Der Sicherungsstift hat einen im Wesentlichen zylindrischen Körper mit einem flanschähnlich ausgeführten Kopf mit einem Durchmesser, der grösser ist als der des zylindrischen Körpers. Es besteht also entfernte Ähnlichkeit zu einem Nagel.

Weiterhin bevorzugt wird in der zweiten Auflagefläche um die Öffnung des Längskanals eine Tasche vorgesehen, die so bemessen ist, dass der Kopf des Sicherungsstiftes bündig mit der zweiten Auflagefläche versenkt werden kann.

Ferner kann der Dorn am Übergang in die erste Auflagefläche so bemessen werden, dass er einen Hinterschnitt bzw. Taille mit verringertem Aussendurchmesser aufweist, dessen Länge die Hälfte der Höhe des Dorns über der ersten Auflagefläche nicht überschreitet. Die Taille wird bevorzugt allseitig ausgeführt sein.

Das somit strukturell beschriebene Dämpfungselement wird wie nachfolgend gezeigt zur Montage eines Einrichtungsgegenstandes an einer Kontaktfläche eingesetzt: Ein Einrichtungsgegenstand wird bereitgestellt. In ihn werden, an dafür vorgesehenen Stellen im Korpus des Einrichtungsgegenstandes - also üblicherweise an der Rückseite - Bohrlöcher bzw. Sacklöcher eingebracht mit einem Durchmesser, der geringfügig über dem Aussendurchmesser des Zapfens liegt; und mit einer Bohrtiefe, die mindestens der Länge des Zapfens entspricht. Da, speziell bei Möbeln aus Holz oder Pressspan, eine Vielzahl von Löchern / Bohrungen für Verzapfungen bzw. Dübel angebracht werden müssen, können solche Löcher auch während der Fertigungsprozesses angebracht werden. Idealerweise wird der Zapfendurchmesser so gewählt, dass es einem sowieso benötigten Bohrdurchmesser des Einrichtungsgegenstandes entspricht, was einen Werkzeugwechsel vermeiden helfen kann.

Die Dämpfungselemente werden am Korpus durch Einführen des Zapfens in das Bohrloch eingebracht, bis die erste Auflagefläche an einer Aussenfläche des Einrichtungsgegenstandes anliegt. Der Korpus kann eine Vielzahl von Optionen anbieten, die dann je nach Einsatzzweck oder Anforderung erst mit Dämpfungselementen bestückt werden.

Durch Eindrücken des Sicherungsstiftes wird die Wandung des Bolzens an die Bohrlochwand gepresst. Das Eindrücken kann manuell oder maschinell erfolgen und wird durch das Anschlagen des Kopfes in seiner Endstellung beendet. Danach kann der Einrichtungsgegenstand an einer Kontaktfläche einer Wand angebracht werden. Das kann ein Anlehnen, Befestigen oder sogar Auflegen bedeuten. Das Dämpfungselement könnte auch als Dämpfungsglied unter einem Einrichtungsgegenstand Verwendung finden, entsprechende Auslegung vorausgesetzt.

Sind die abzudämpfenden Lasten bekannt, lässt sich aus dem Elastizitätsmodul des verwendeten Materials die Mindestgrösse bzw. Dicke eines Dämpfungselementes ermitteln.

Die hier beschriebene Konfiguration soll nicht als einschränkend verstanden werden. Ein Dämpfungselement könnte erfindungsgemäss auch als langer Streifen ausgelegt werden, gesichert durch mehrere Sicherungsstifte der beschriebenen Art. Die Funktionalität des beschriebenen Bolzens bliebe dabei dieselbe.

### BESCHREIBUNG DER FIGUREN

- Figur 1: zeigt eine Schrägansicht eines Dämpfungselementes in einfachster Ausführung.
- Figur 2: zeigt einen Schnitt durch die Ausführung nach Figur 1.
- Figur 3: zeigt eine Schrägansicht eines Dämpfungselementes in gewinkelter Ausführung.
- Figur 4: zeigt einen Schnitt durch die Ausführung nach Figur 3.
- Figur 5: zeigt eine Variante einer Zapfenausführung mit Taille bzw. Hinterschnitt.

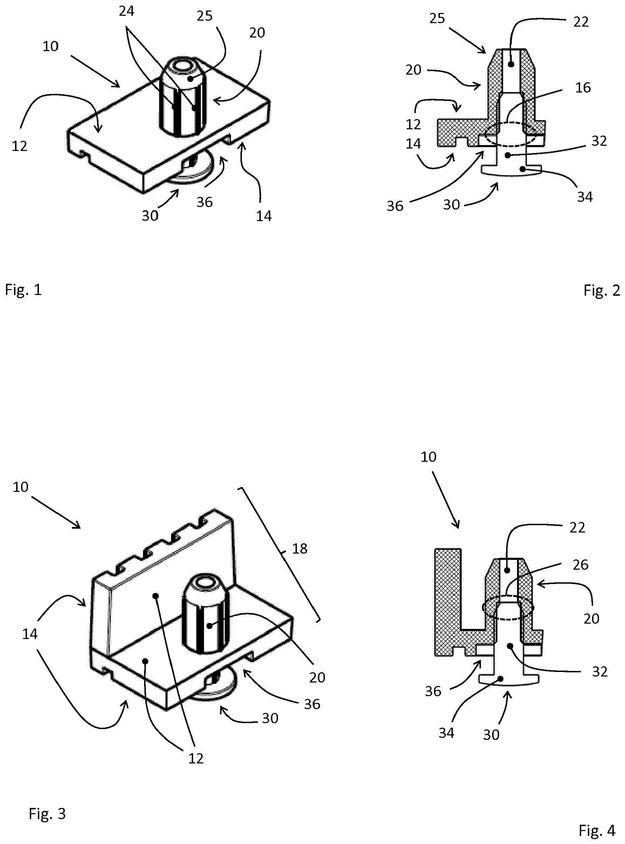

Figur 1 zeigt das Dämpfungselement 10 gemäss einer ersten Ausführung. Der flächige Körper weist eine erste Auflagefläche 12 und eine gegenüberliegende zweite Auflagefläche 14 auf. In der zweiten Auflagefläche 14 ist eine Rille einer konturierten Oberfläche erkennbar, ebenso eine Tasche 36. Der Zapfen 20 weist einen Konus 25 am oberen Ende auf. Die Mantelfläche des Zapfens ist mit Längsrippen 24 versehen. Merkmal 30 zeigt den Sicherungsstift halb eingeschoben, die Tasche 36 in der Auflagefläche 14 ist nicht gefüllt.

Figur 2 zeigt im Querschnitt das Dämpfungselement von Figur 1. Erkennbar ist deutlich der axiale Längskanal 22, der zentral durch den Dorn 20 verläuft und in der Öffnung 16 in der Auflagefläche 14 endet.

Figur 3 zeigt ein Dämpfungselement 10 in der Ausführung mit L-Kontur 18. Die Auflageflächen 12 und 14 sind jeweils gewinkelt, was die Dämpfungswirkung auf zwei Seiten erstreckt und auch einen Kantenschutz (im montierten Zustand) bewirkt. Der Zapfen 20 ist auf einem Teil der Auflagefläche 12 angeordnet.

Figur 4 zeigt das Element von Figur 3 im Querschnitt. Markiert ist hier die zusätzlich Stufe 26, bei der sich der Durchmesser des axialen Längskanals 22 verringert. Dadurch entsteht eine Art Vormontageposition für den Sicherungsstift 30, der den Kanal 22 bis zur Stufe 26 passieren kann und klemmend dort gesichert bleibt. Wird das Dämpfungselement 10 eingesetzt und der Dorn 20 in einem entsprechend dimensionierten Bohrloch versenkt, muss die Stufe 26 durch erhöhten Druck auf den Sicherungsstift 30 überwunden werden. Das elastische Material des Dorns 20 wird dadurch an die Bohrlochwandung gepresst und das Dämpfungselement 10 gesichert.

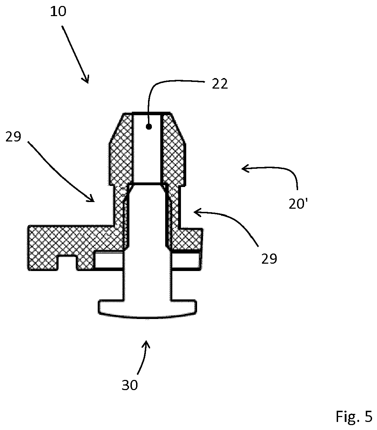

Figur 5 zeigt ein Dämpfungselement 10 mit einem Dorn 20'. Der axiale Längskanal 22 ist gestuft, der Sicherungsstift ist in vormontierter Position gezeigt. Zusätzlich zeigt diese Ausführungsvariante eine Taille oder Hinterschnitt 29. Da das Einführen des Stiftes 30 zu einem Klemmsitz führt, wird der Durchmesser des Dorns 20 im Bereich des eingeführten Stiftes 30 geringfügig aufgeweitet. Um dennoch ein einfaches Einführen des Dorns in ein Bohrloch zu erlauben, kann der Hinterschnitt 29 geschaffen werden, der diese Aufweitung auffängt.

Die in der vorstehenden Beschreibung, in den Zeichnungen sowie in den Ansprüchen offenbarten Merkmale der Erfindung können sowohl einzeln als auch in beliebiger, jedoch technisch sinnvoller bzw. vorteilhafter Kombination für die Verwirklichung der Erfindung wesentlich sein.

## Patentansprüche

1. Ein Dämpfungselement (10), ausgelegt zur Anbringung zwischen einem Einrichtungsgegenstand und dessen vorgesehener Kontaktfläche, weist einen flächigen Körper auf mit einer ersten Auflagefläche (12) und einer ihr gegenüberliegend angeordneten zweiten Auflagefläche (14), **dadurch gekennzeichnet, dass** auf der ersten Auflagefläche (12) ein zylinderförmiger Zapfen (20) angeordnet ist.

2. Dämpfungselement (10) nach Anspruch 1, **dadurch gekennzeichnet, dass** der flächige Körper entlang einer Kante abgewinkelt ist und im Wesentlichen eine L-Kontur (18) aufweist.

3. Dämpfungselement (10) nach Anspruch 1-2, **dadurch gekennzeichnet, dass** der Zapfen (20) einen axialen Längskanal (22) durch die Zentralachse des Zapfens (20) besitzt, der sich auch durch den Körper des Dämpfungselementes (10) hindurch erstreckt und eine Öffnung (16) in der zweiten Auflagefläche (14) bildet.

4. Dämpfungselement (10) nach Anspruch 1-3, **dadurch gekennzeichnet, dass** der Längskanal (22) als im Querschnitt kreisrunder, rohrförmiger Hohlraum ausgebildet ist..

5. Dämpfungselement (10) nach Anspruch 1-4, **dadurch gekennzeichnet, dass** der Zapfen (20) an seinem von der ersten Auflagefläche wegweisenden Ende eine konusförmige Abschrägung (25) aufweist.

6. Dämpfungselement (10) nach Anspruch 1-5, **dadurch gekennzeichnet, dass** der Zapfen (20) an seiner Mantelfläche angeordnete Längsrippen (26) aufweist.

7. Dämpfungselement (10) nach Anspruch 1-6, **dadurch gekennzeichnet, dass** das Dämpfungselement (10) und der Zapfen (20) einstückig aus elastischem Material geprägt, gepresst, gegossen oder formgespritzt sind.

8. Dämpfungselement (10), nach Anspruch 1-7, **dadurch gekennzeichnet, dass** die zweite Auflagefläche (14) ein konturierte oder texturierte Oberfläche aufweist mit einem Rillen / Stegprofil, Noppen, Wellenprofil oder einer aufgerauten Oberfläche.

9. Dämpfungselement (10) nach Anspruch 1-8, **dadurch gekennzeichnet, dass** der Innendurchmesser des axialen Längskanals (22) nicht konstant ausgelegt ist, sondern sich von der Öffnung (16) in der zweiten Auflagefläche (14) weg entlang des Kanals verringert.

10. Dämpfungselement nach Anspruch 9, **dadurch gekennzeichnet, dass** die Verringerung als eine von der Öffnung (16) entfernte, im Längskanal (22) angeordnete Stufe (26) ausgeführt ist, an der der Innendurchmesser des Längskanals (22) sich von einem konstanten ersten Wert zu einem geringeren Wert verringert.

11. Dämpfungselement (10) nach den Ansprüchen 1-10, **dadurch gekennzeichnet, dass** ferner ein Sicherungsstift (30) aus einem nicht-elastischen Material vorgesehen ist, dessen Aussendurchmesser so gewählt ist, dass er klemmend in die Öffnung (16) in der zweiten Auflagefläche (14) einführbar ist.

12. Dämpfungselement (10) nach den Ansprüchen 11, **dadurch gekennzeichnet, dass** der Sicherungsstift (30) einen im Wesentlichen zylindrischen Körper (32) hat mit einem flanschähnlich ausgeführten Kopf (34) dessen Durchmesser der grösser ist als der des zylindrischen Körpers (32).

13. Dämpfungselement (10) nach Anspruch 1- 12, **dadurch gekennzeichnet, dass** in der zweiten Auflagefläche (14) um die Öffnung (16) eine Tasche (36) vorgesehen ist, die so bemessen ist, dass der Kopf (34) des Sicherungsstiftes (30) bündig mit der zweiten Auflagefläche (14) versenkt werden kann.

14. Dämpfungselement (10) nach Anspruch 1- 13, **dadurch gekennzeichnet, dass** der Dorn (20) am Übergang in die erste Auflagefläche (12) einen Hinterschnitt (29) mit verringertem Aussendurchmesser aufweist, dessen Länge die Hälfte der Höhe des Dorns (20) über der ersten Auflagefläche (12) nicht überschreitet.

15. Verfahren zur Montage eines Einrichtungsgegenstandes an einer Kontaktfläche mit mindestens einem Dämpfungselement (10) nach Anspruch 1-14, mit folgenden Sch ritten:
- Bereitstellen eines Einrichtungsgegenstandes;
- Einbringen von Bohrlöchern mit einem Durchmesser, der geringfügig unter dem Aussendurchmesser des Zapfens (20) liegt und einer Bohrtiefe, die mindestens der Länge des Zapfens (20) entspricht, an dafür vorgesehenen Stellen im Korpus des Einrichtungsgegenstandes;
- Anbringen der Dämpfungselemente am Korpus durch Einführen des Zapfens (20) in das Bohrloch, bis die erste Auflagefläche (12) an einer Aussenfläche des Einrichtungsgegenstandes anliegt;
- Eindrücken des Sicherungsstiftes (30), bis dessen Kopf (34) in seiner Endstellung anschlägt.
- Anbringen des Einrichtungsgegenstandes an einer Kontaktfläche.
